# EUROPÄISCHE PATENTSCHRIFT

(11) **EP 3 427 985 B1**
(45) Veröffentlichungstag und Bekanntmachung des Hinweises auf die Patenterteilung: **12.01.2022**
(21) Anmeldenummer: 18182798.1
(22) Anmeldetag: 10.07.2018
(51) Int. Cl.: B60J 7/06, B60J 5/06, B62D 33/04

(54) **PLANENAUFBAU MIT SPANNMITTELHALTER**
TARPAULIN STRUCTURE WITH TENSIONING MEANS HOLDER
STRUCTURE DE TARPUALINE AVEC SUPPORT DE MOYEN DE TENSION

(30) Priorität: 14.07.2017 DE 202017104214 U
(43) Veröffentlichungstag der Anmeldung: 16.01.2019
(73) Patentinhaber: European Trailer Systems GmbH, 47441 Moers (DE)
(72) Erfinder: Frentzen, Frank, 41749 Viersen (DE)
(74) Vertreter: Sparing, Rolf Klaus

(56) Entgegenhaltungen:
- EP-A2- 2 098 397
- DE-A1- 19 756 865
- DE-A1-102009 044 801
- DE-U1-202007 010 786
- DE-U1-202008 008 651
- US-A1- 2007 085 369

## Beschreibung

Die Erfindung betrifft einen Planenaufbau nach dem Oberbegriff des unabhängigen Patentanspruchs 1.

EP 1 387 775 B1 beschreibt einen Planenaufbau, bei dem ein Verdeckgestell auf einer Ladepritsche abgestützt ist und einen Laderaum überspannt, wobei eine an verfahrbaren Spriegeln des Verdeckgestells angeschlossene Dachplane ein Öffnen und Schließen der Dachöffnung zulässt, wobei in einer Ebene der Spriegel ein zugsteifes Spannmittel angeordnet ist, wobei das Spannmittel in einem vorderen Eckbereich des Verdeckgestells und an einem hinteren verfahrbaren Spriegel im Bereich derselben Längsseite des Verdeckgestells festgelegt ist, während das Spannmittel in wenigstens einem Zugpunkt in einem Bereich der anderen Längsseite gehaltert ist. Hierbei kann das Spannmittel auch aus mehreren Spannmittelabschnitten bestehen, so dass bei Realisierung als Drahtseil das Drahtseil einmal von einer vorderen Ecke zu einem gegenüberliegenden, in etwa mittigen Spriegel auf der gegenüberliegenden Längsseite gespannt ist, und andererseits ein weiteres Spannmittel von der hinteren Ecke zu demselben Spriegel auf der anderen Längsseite gespannt ist. Beim Zusammenschieben des Schiebedachs neigen die Spannmittel dazu, in den Bereich des Laderaums zu gelangen, wo sie mit der beförderten Ware verhaken können. Daher ist es häufig erforderlich, die Spannmittel an allen Spriegeln zu führen, was zu erheblichem Montageaufwand führt. Legt man die Spannmittel ferner an der Dachplane fest, werden die Spannmittel im Bereich ihrer Befestigung mit den Teilen des Verdeckgestells wie Spriegeln und dergleichen geknickt und neigen dazu, zu verschleißen bzw. kaputt zu gehen.

DE 20 2008 008 651 U1 beschreibt einen Planenaufbau für ein Nutzfahrzeug, bei dem ein Verdeckgestell mit zumindest einer öffnungsfähigen oberen Abdeckung einen Laderaum überspannt, wobei die Abdeckung eine Plane umfasst, die an Spriegeln festgelegt ist, wobei die Spriegel entlang einer Führung des Verdeckgestells zum Öffnen und Schließen der Abdeckung durch Zusammenfalten der Plane verlagerbar sind. Die Führungen sind durch zugfeste Spannmittel miteinander verbunden und verspannen einen Bereich der Führung mit einem gegenüberliegenden Bereich der Führung. Hierbei ist für den Anschluss der Führungen an den Spriegel ein als Befestigungskörper ausgebildeter Spannmittelhalter vorgesehen, der eine Mehrzahl von langlochartigen Aussparungen aufweist, in die eine Öse des als Gurt ausgebildeten Spannmittels durch Hineinführen entlang einer Zugangsöffnung endseitig eingesetzt werden kann. Ausgehend von einem Mittenbereich des Halteelements sind die Aussparungen von breiten Materialabschnitten des Befestigungskörpers umgeben, die es verhindern, dass das Spannmittel in der Aussparung schwenkt.

DE 197 56 865 A1 beschreibt einen Planenaufbau für ein Nutzfahrzeug, bei dem ein Verdeckgestell mit zumindest einer öffnungsfähigen Dachabdeckung einen Laderaum überspannt, wobei die Dachabdeckung eine Plane und Spriegel umfasst. Die Spriegel sind entlang einer Führung des Verdeckgestells zum Öffnen und Schließen der Abdeckung durch Zusammenfalten der Plane verlagerbar. Hierbei sind die Führungen durch zugfeste Spannmittel miteinander verbunden, die einen Bereich der Führung mit einem gegenüberliegenden Bereich der Führung verspannen. Zum Aufnehmen der Spannmittel ist an der Unterseite des entsprechenden Spriegels eine Ringöse angeschweißt, durch die die Spannmittel hindurchgeführt und in der die Spannmittel umgelenkt werden.

DE 20 2007 010 786 U1 beschreibt einen Planenaufbau für ein Nutzfahrzeug, bei dem ein Verdeckgestell mit einer öffnungsfähigen Abdeckung einen Laderaum überspannt, wobei die Abdeckung eine Plane und Spriegel umfasst, wobei die Spriegel entlang einer Führung des Verdeckgestells zum Öffnen und Schließen der Abdeckung durch Zusammenfalten der Plane verlagerbar sind. Hierbei sind zugfeste Spannmittel vorgesehen, die einen Bereich der Führung mit einem gegenüberliegenden Bereich der Führung verbinden. Weitere zugfeste Spannmittel sind endseitig jeweils an einem mittleren Bereich zwischen den beiden Führungen angeschlossen und mit ihrem anderen Ende an einen Spriegel im Bereich der Führung ohne jedoch die gegenüberliegenden Führungen miteinander zu verspannen. Hierzu sind an den einzelnen Spriegeln Anschlusselemente vorgesehen, mit einem U-förmigen Profilabschnitt für den Anschluss an den Spriegel und den hiervon senkrecht in einer horizontalen Ebene abstehenden Beschlagelementen, die jeweils eine Bohrung für den Anschluss eines Spannmittels aufweisen, wobei die Bohrungen ein Verschwenken des Spannmittels nur in einer horizontalen Ebene zulassen, nicht jedoch zum Aufstellen nach oben beim Zusammenfalten der Plane.

DE 10 2009 044 801 A1 beschreibt einen Planenaufbau für ein Nutzfahrzeug, umfassend ein Verdeckgestell mit zumindest einer öffnungsfähigen, seitlichen Abdeckung, die einen Laderaum überspannt, wobei die Abdeckung eine Plane umfasst, in der vertikale Rungen eingefasst sind, damit die Rungen und die Plane gemeinsam nach dem Entriegeln entlang einer oberen Führung über einen Rollenapparat verlagert werden können. Benachbarte Rungen sind über diagonale Verstärkungsmittel miteinander verbunden, so dass bei der Verriegelung des unteren Endes der Runge mit einem Rungenhalter die Seitenwand ausgesteift ist. Die diagonalen Verstärkungsbänder sind an Vernietungen der Runge mit der Plane, die horizontal angeordnet sind, angeschlossen, so dass die Verstärkungsbänder um eine vertikale Achse nach unten schwenken können, wenn die Plane zusammengeschoben wird.

Es ist die Aufgabe der Erfindung, einen Planenaufbau anzugeben, bei dem die Behinderung durch Spannmittel beim Öffnen und Schließen der Plane reduziert ist.

Diese Aufgabe wird erfindungsgemäß durch einen Planenaufbau mit den Merkmalen des unabhängigen Anspruchs 1 gelöst.

Gemäß der Erfindung ist ein Planenaufbau, insbesondere für ein Nutzfahrzeug, einen LKW, einen Anhänger, einen Auflieger, einen Container, ein Schienenfahrzeug, ein Schwimmbad, ein Gebäude oder dergleichen angegeben, umfassend ein Verdeckgestell mit zumindest einer öffnungsfähigen Abdeckung, die einen Laderaum überspannt, wobei die Abdeckung eine Plane umfasst, die an Spriegeln festgelegt ist, wobei die Spriegel entlang einer Führung des Verdeckgestells zum Öffnen und Schließen der Abdeckung durch Zusammenfalten der Plane verlagerbar sind, bei dem die Führungen durch zugfeste Spannmittel miteinander verbunden sind, die einen Bereich der Führung mit einem gegenüberliegenden Bereich der Führung verspannen. Hierbei ist weiter vorgesehen, dass das Spannmittel in einem Lagerauge schwenkbar angeschlossen ist, das eine Verschwenkung des Spannmittels um eine Achse nach oben zulässt, und dass das Spannmittel mit dem Zusammenfalten der Plane mit der Plane nach oben verschwenkbar ist.

Hierdurch wird vorteilhaft erreicht, dass die Spannmittel mit dem Zusammenfalten der Plane aus dem Bereich der Dachöffnung fort verschwenkt werden können, ohne dass die Spannmittel durch Knicken oder Reiben beschädigt werden. Das Lagerauge ist hierbei senkrecht zur Zugrichtung des Spannmittels ausgerichtet, so dass es nicht zu unnötigen Bewegungen des Spannmittels in den Lagerauge kommt und die Kräfte zuverlässig in das Spannmittel eingeleitet werden können.

Es ist möglich, das Spannmittel mit geringem Spiel in dem Lagerauge aufzunehmen und damit auch die Schwenkrichtung des Spannmittels beim Zusammenfalten der Plane vorzugeben. Zugleich ist das hierdurch reduzierte Spiel günstig für die weitergehende Übertragung der Kräfte von einem Längsträger in den gegenüberliegenden Längsträger.

Der erfindungsgemäße Planenaufbau zeichnet sich weiter durch zumindest einen Spannmittelhalter aus, wodurch das Spannmittel in dessen Lagerauge gelenkig einer Faltbewegung der Plane folgen kann. Hierdurch wird vorteilhaft die Standzeit der durch die Spannmittel verwirklichten Dachaussteifungen verlängert und die Beschädigung der transportierten Ware vermieden. Der Spannmittelhalter umfasst einen Befestigungsabschnitt, der zur Befestigung an einem beweglichen oder an einem feststehenden Element des Planenaufbaus ausgebildet ist, und einen ersten Lagerabschnitt, der ein Lagerauge für den Anschluss eines Spannmittels aufweist. Vorteilhaft wird hierdurch erreicht, dass das Spannmittel beim Öffnen und Schließen um eine vorzugsweise horizontale Achse nach oben ermöglicht ist, so dass das Spannmittel nicht geknickt und damit nicht mit einer Sollbruchstelle versehen ist. Das Hochschwenken des Spannmittels um die Achse ermöglicht es zugleich, das Spannmittel an der Plane oder an Hubspriegeln des Verdeckgestells festzulegen, so dass verhindert wird, dass die Spannmittel in den Laderaum bzw. in den Bereich der Ladung herabhängen.

Der Winkel, den der erste Lagerabschnitt zu dem Befestigungsabschnitt aufweist, richtet das Lagerauge so aus, dass es senkrecht zur Erstreckungsrichtung des Spannmittels bei geschlossenem Dach vorgesehen ist, so dass es zu einer günstigen Einleitung von Kräften in die Teile des Verdeckgestells kommt.

Der Winkel, den der erste Lagerabschnitt zu dem Befestigungsabschnitt einnimmt, beträgt mehr als 90°, so dass die Achse des Lagerauges weder parallel noch senkrecht zu einem Spriegel, an der der Spannmittelhalter angeschlossen wird, verläuft.

Vorzugsweise ist an dem Befestigungsabschnitt ein zweiter Lagerabschnitt angeordnet, der einen Winkel zu dem Befestigungsabschnitt aufweist. Der zweite Lagerabschnitt ermöglicht es, an denselben Spriegeln die Enden von zwei Spannmitteln zum Verspannen des Dachbereichs anzuschließen, so dass die an dem dem Spriegel zugeordneten Längsträger des Verdeckgestells eingeleiteten Kräfte in zwei Richtungen in den gegenüberliegenden Längsträger abgeleitet werden können. Es versteht sich jedoch, dass Spannmittelhalter, die in einem Eckbereich des Dachs montiert werden, nur einen Lagerabschnitt benötigen. Durch das Vorsehen von Spannmittelhaltern mit zwei Lagerabschnitten wird zugleich sichergestellt, dass die Kräfte, die durch statische oder dynamische Belastungen des Längsträgers aufgenommen werden müssen, gleichmäßig in eine vordere und/oder eine hintere Ecke des Planenaufbaus bzw. des Verdeckgestells abgeleitet werden.

Zweckmäßigerweise sind der erste Lagerabschnitt und der zweite Lagerabschnitt spiegelbildlich angeordnet, so dass die Spannmittel in demselben Winkel von dem Spannmittelhalter beiderseits abgehen. Es ist aber auch möglich, die Winkel, mit denen die Lagerabschnitte von dem Befestigungsabschnitt abstehen, unterschiedlich auszubilden, beispielsweise dann, wenn hinsichtlich des Verlaufs der Spannmittel keine Symmetrie gegeben ist.

Gemäß einer bevorzugten Ausgestaltung ist vorgesehen, dass der Befestigungsabschnitt U-förmig ausgebildet ist, wobei er eine Basisfläche sowie senkrecht hiervon abstehend zwei Schenkelflächen, nämlich eine erste Schenkelfläche und eine zweite Schenkelfläche, aufweist, so dass das gebildete U von unten an ein Vierkantprofil anschließbar ist. Alternativ kann der Befestigungsabschnitt auch eine andere Form aufweisen, die an ein Profil, das beispielsweise einem Spriegel zugeordnet ist, angepasst ist, beispielsweise eine abgerundete U-Form oder einer V-Form. Schließlich kann der Befestigungsabschnitt auch als Winkel ausgebildet sein, der in den Bereich eines vorderen Randabschnitts des Planenaufbaus festgelegt wird, um die Kräfte in eine Ecke des Verdeckgestells einzuleiten.

Der Lagerabschnitt steht vorzugsweise jeweils von einer Schenkelfläche ab, so dass der Winkel zwischen der Schenkelfläche und dem Lagerabschnitt mit der Erstreckung des Spannmittels ausgerichtet ist. Der Winkel ist hierbei zweckmäßig größer 90° ausgebildet, um ein Aufspreizen des Winkels zu vermeiden. Zweckmäßig beträgt der Winkel zwischen 95° und 150° und besonders bevorzugt zwischen 100° und 130°, beispielsweise 108° +/- 4°.

Vorzugsweise weisen die einander gegenüberliegenden Schenkelflächen jeweils eine miteinander fluchtende Bohrung auf, die von einem Sicherungsstift durchsetzbar ist. Der Sicherungsstift durchsetzt hierbei eine Bohrung des Profils des Spriegels und ermöglicht auf diese Weise den Anschluss des Spannmittelhalters an den Spriegel.

Gemäß einer bevorzugten Ausgestaltung ist vorgesehen, dass der Lagerabschnitt einen Anschlag aufweist, auf dem das Spannmittel ablegbar ist. Vorzugsweise ist der Anschlag auf beiden Seiten des Lagerabschnitts vorgesehen, so dass ein gabelförmiges Ansetzstück, das über einen Zapfen an dem Lagerauge befestigt wird, den Lagerabschnitt umgreifen kann, aber daran gehindert ist, über die Horizontale hinaus herabzuschwenken. Der Anschlag verhindert damit, dass das Spannmittel in den Bereich des Lagerraums herabschwenken kann, so dass sichergestellt ist, dass bei Zusammenfahren der Dachöffnung das Spannmittel mit Dachplane angehoben wird. Hierzu ist das Spannmittel zweckmäßig mit der Plane oder einem Hubspriegel verbunden. Günstigerweise handelt es sich bei dem Spannmittelhalter um ein Blechbiegeteil, das durch Biegen aus einem Stahlblech hergestellt ist, und das sich leicht lochen lässt und eine hohe Steifigkeit gegenüber den zu übertragenden Kräften durch die Spannmittel bereitstellt.

Gemäß einer besonders bevorzugten Ausgestaltung ist vorgesehen, dass eine Führungsanordnung für ein Federglied an dem Spannmittelhalter angeschlossen ist, welches die Spannmittel in eine Schwenkrichtung um das Lagerauge vorspannt. Das Federglied ist beispielsweise als elastisches Band ausgestaltet, das beidendig jeweils mit einem von zwei Spannmitteln verbunden ist und dafür sorgt, dass die Spannmittel in eine Schwenkrichtung um das Lagerauge nach oben vorgespannt sind. In einer einfachen Ausgestaltung kann das Federglied einfach um den Spriegel herumgelegt sein, vorzugsweise ist jedoch an dem Spannmittelhalter eine Führung, beispielsweise ein Auge oder dergleichen vorgesehen, das es ermöglicht, dass das Federglied auch gegen den Spannmittelhalter selbst gespannt ist. Anstelle eines Federglieds, das zwei Spannmittel in eine Schwenkrichtung um das Lagerauge vorspannt, können auch zwei Federglieder vorgesehen sein, die jeweils ein Spannmittel in diese Schwenkrichtung vorspannen.

Zweckmäßigerweise ist bei dem Planenaufbau ein öffnungsfähiger Abschluss einer seitlichen oder oberen Öffnung durch eine Plane bedeckt und über Spriegel entlang seitlicher Führungen verlagerbar, wobei die einander gegenüberliegenden Führungen durch Spannmittel miteinander verbunden sind.

Zweckmäßigerweise ist das Lagerauge an dem Spannmittelhalter vorgesehen, der an einem der Spriegel angeschlossen ist. Hierdurch ist es insbesondere möglich, den Zugpunkt der Spannmittel, der in einem mittleren Bereich des Längsträgers vorgesehen ist, an dem Spriegel vorzusehen, der beim Schließen der Dachplane eine definierte Position einnimmt. Vorteilhaft muss hierzu keine Durchführung für das Spannmittel in dem Spriegel vorgesehen sein. Ist das andere Ende eines Spannmittels an einem heckseitigen Spriegel des Verdeckgestells angeschlossen, kann auch durch den Spannmittelhalter ein einfaches und ausgerichtetes Anschließen der Spannmittel erreicht werden. Auch im vorderen Bereich des Planenaufbaus kann ein Spannmittelhalter an einem vorderen Spriegel des Verdeckgestells angeschlossen werden und dadurch ein einfaches Anbringen der Teile sichergestellt sein. Alternativ kann der Spannmittelhalter aber auch an einer Eckrunge oder einer vorderen Ladebordwand oder an den Längsträger selbst angeschlossen sein.

Der Spannmittelhalter weist einen Befestigungsabschnitt, der zur Befestigung an einem beweglichen oder an einem feststehenden Element des Planenaufbaus ausgebildet ist, und einen ersten Lagerabschnitt der das Lagerauge für den Anschluss eines Spannmittels aufweist, auf, so dass der Befestigungsabschnitt in einfacher Weise an dem beweglichen oder feststehenden Element wie einem Spriegel des Verdeckgestells angeschlossen werden kann, während von dem Befestigungsabschnitt forttragend ein erster und ggf. auch ein zweiter Lagerabschnitt vorgesehen ist, der das Lagerauge für den Anschluss des Spannseils aufweist. Durch das Abwinkeln des Lagerabschnitts von dem Befestigungsabschnitt kann auch die Ausrichtung des Lagerabschnitts so gewählt sein, dass das Lagerauge exakt senkrecht zur Zugrichtung des Spannmittels ausgerichtet ist.

Der Winkel des ersten Lagerabschnitts bzw. des zweiten Lagerabschnitts zu dem Befestigungsabschnitt ist hierbei zweckmäßig ausgewählt zwischen 95° und 140°, vorzugsweise 100° und 125°, beispielsweise bei 110° +/- 5°.

Zweckmäßigerweise ist ein Federglied vorgesehen, das die Spannmittel in eine Schwenkrichtung um das Lagerauge vorspannt. Eine Führungsanordnung für das Federglied kann in einer Öse, die an dem Spriegel oder an dem Spannmittelhalter angeschlossen ist, ausgeführt sein, während das Federglied beispielsweise als elastisches Band mit Federeigenschaften oder auch als Schraubenzugfeder ausgeführt ist. Alternativ kann auch eine Schenkelfeder vorgesehen sein, die die Spannmittel in entgegengesetzte Richtungen gegenseitig oder gegen den Spannmittelhalter oder den Spriegel in eine Richtung fort von dem Anschlag und damit in Fahrtrichtung der Plane vorspannt.

Das Spannmittel ist zweckmäßig als Drahtseil ausgebildet, das endseitig jeweils gelenkig in einem Lagerauge aufgenommen ist. Hierzu ist endseitig an dem Drahtseil jeweils ein zweischenkeliges Gelenkauge vorgesehen, das nach Art eines U den Lagerabschnitt umgreift und mit einem Stift in dem Lagerauge gelenkig gelagert ist. Durch das Vorsehen von zwei flachen Schenkeln, die den Lagerabschnitt umgreifen, wird eine stabile Kopplung erreicht.

Die öffnungsfähige Abdeckung ist zweckmäßigerweise als öffnungsfähiges Dach ausgebildet, es versteht sich aber, dass die öffnungsfähige Abdeckung auch als Seitenteil eines Planenaufbaus ausgeführt sein kann; die Spannmittel sind dann nicht zwischen zwei gegenüberliegenden Längsträgern des Verdeckgestells zur Aussteifung vorgesehen, sondern zwischen einem von Rungen abgestützten Längsträger einerseits und einer unteren Führungsschiene andererseits.

Zweckmäßigerweise bilden mehrere der Spannmittel eine den Dachbereich des Planenaufbaus diagonal überspannende Dachaussteifung aus. Gemäß einer ersten, besonders bevorzugten Realisierungsform reicht hierbei ein erstes Spannmittel von einer vorderen Ecke des Planenaufbaus bis zu einem in etwa mittigem Spriegel im Bereich des gegenüberliegenden Längsträgers und ein weiteres Spannmittel von dem genannten Spriegel bis zu einer gegenüberliegenden hinteren Ecke des Planenaufbaus, wobei spiegelbildlich weitere Spannmittel vorgesehen sind, so dass ein Dreieck mit jeweils den Längsträger als Basis im Wesentlichen beschrieben ist. Es versteht sich, dass andere Formen möglich sind, insbesondere der Zugpunkt auf der gegenüberliegenden Seite nicht in der Mitte vorgesehen sein muss, und dass auch trapezförmige Ausgestaltungen möglich sind.

Vorzugsweise ist eine Dachaussteifung dadurch gegeben, dass die Spannmittel wenigstens an einem vorderen Eckbereich des Verdeckgestells und an einem hinteren verfahrbaren Spriegel im Bereich desselben Längsträgers des Verdeckgestells festgelegt sind, und dass das Spannmittel mit wenigstens einem Zugpunkt in einem Bereich der anderen Längsseite des Verdeckgestells angeschlossen ist. Hierdurch wird im Bereich der maximalen Durchbiegung des gegenüberliegenden Längsträgers eine wirksame Krafteinleitung geschaffen, die in die stabilsten Bereiche des Verdeckgestells, nämlich die Eckbereiche der gegenüberliegenden Längsseite bzw. des gegenüberliegenden Längsträgers eingeleitet wird.

Weitere Vorteile, Eigenschaften und Weiterbildungen der Erfindung ergeben sich aus den abhängigen Ansprüchen sowie der nachfolgenden Beschreibung eines bevorzugten Ausführungsbeispiels.

Die Erfindung wird nachstehend unter Bezugnahme auf die anliegenden Zeichnungen anhand eines bevorzugten Ausführungsbeispiels näher erläutert, wobei diejenigen Teile des Planenaufbaus, die aus dem Stand der Technik bekannt sind, nicht mehr im Einzelnen gezeigt sind, durch den Fachmann aber ohne Weiteres ergänzt werden können.
- Fig. 1: zeigt in einer perspektivischen Ansicht ein bevorzugtes Ausführungsbeispiel eines Spannmittelhalters.
- Fig. 2: zeigt den Spannmittelhalter aus Fig. 1 in einer Ansicht von schräg unten.
- Fig. 3: zeigt den Spannmittelhalter aus Fig. 1 und Fig. 2 in einer Draufsicht.
- Fig. 4: zeigt einen Ausschnitt eines Spriegels, bei dem der Spannmittelhalter aus Fig 1 bis 3 an einem Vierkantprofil eines Spriegels eines Verdeckgestells eines Planenaufbaus angeschlossen ist.

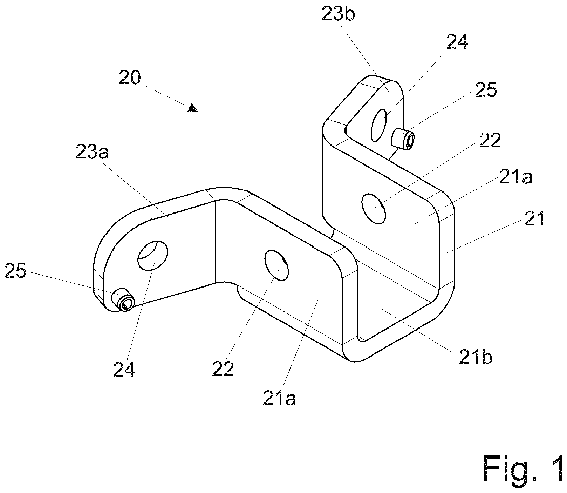

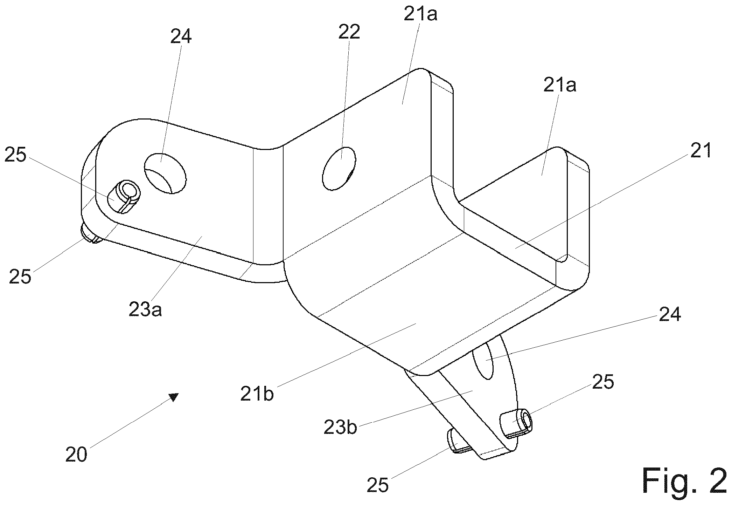

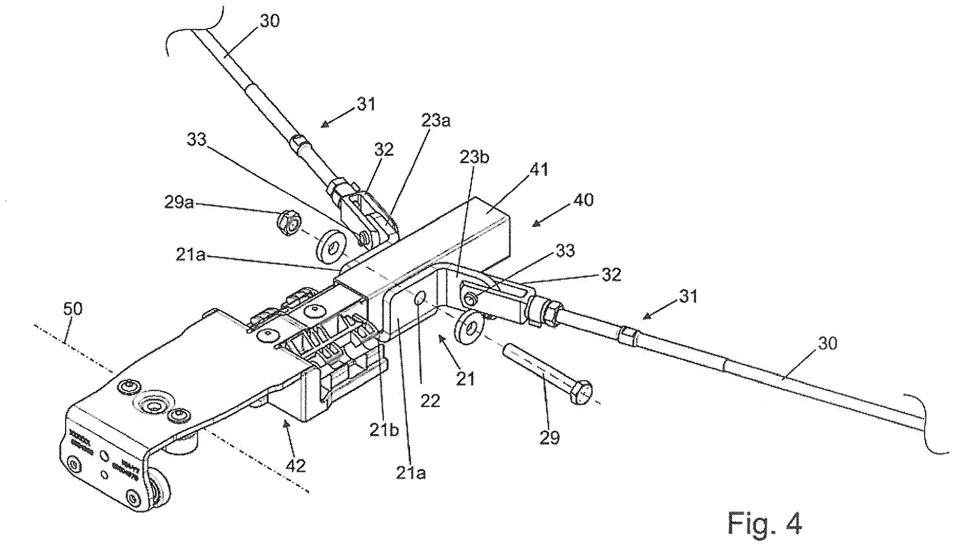

Der in Fig. 1 bis Fig. 4 dargestellte Spannmittelhalter 20 ist dazu bestimmt, an einen Vierkantabschnitt 41 eines in Teilen dargestellten Spriegels 40 angeschlossen zu werden, wobei in Fig. 4 weiter der ebenfalls an das Vierkantprofil 41 angeschlossene Schlitten 42 gezeigt ist. Der Schlitten 42 ist entlang eines durch eine strichpunktierte Linie 50 angedeuteten Längsträgers mit entsprechenden Führungsbahnen verlagerbar. Der Längsträger 50 sowie die Spriegel 40 sind Teile des Verdeckgestells des Planenaufbaus, das im Übrigen nicht im Einzelnen dargestellt ist.

Der Spannmittelhalter 20 ist dazu bestimmt, zwei als Drahtseile ausgebildete Spannmittel 30 aufzunehmen und umfasst hierzu einen im Wesentlichen zur Anpassung an das Vierkantprofil 41 U-förmig ausgebildeten Befestigungsabschnitt 21, der eine Basisfläche 21b und zwei hiervon im Wesentlichen senkrecht abgefaltet, abstehende Schenkelflächen 21a umfasst. Die beiden Schenkelflächen 21a sind parallel zueinander angeordnet und weisen jeweils eine konzentrisch zueinander ausgerichtete Bohrung 22 auf, die für den Durchtritt eines Schraubenschafts 29 bestimmt ist, mit der der Befestigungsabschnitt 21 an das Vierkantprofil 41 festgelegt wird, beispielsweise mittels einer Mutter 29a. Hierzu ist auch in dem Vierkantprofil 41 eine entsprechende Durchgangsbohrung vorgesehen, mit der vorzugsweise auch ein Teil des Schlittens 42 an das Vierkantprofil 41 befestigt wird, so dass die Schraube 29 auch ein Teil von dessen Schaftende durchsetzt.

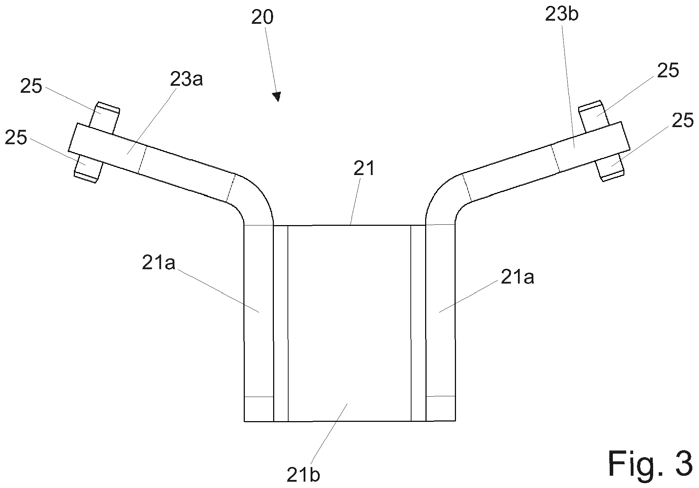

Von den Schenkelflächen 21a ist an einer Seite jeweils ein erster Lagerabschnitt 23a und ein zweiter Lagerabschnitt 23b abgefaltet, wobei in jedem der Lagerabschnitte 23a, 23b jeweils ein Lagerauge 24 vorgesehen ist. Insbesondere in Fig. 3 erkennt man, dass ein Winkel die Ebene des Lagerabschnitts 23a, 23b zur Ebene der Schenkelfläche 21a, 21b jeweils etwa 108° beträgt, so dass sich der Lagerabschnitt im Wesentlichen in Verlängerung der optimalen Zugrichtung des Spannmittels 30 erstreckt.

Das Spannmittel 30 dient dazu, gegenüberliegende Seiten bzw. Längsträger 50 des Verdeckgestells miteinander zu verspannen, so dass zugsteife Elemente wie Drahtseile, aber auch Gurte oder auch Ketten hierfür eingesetzt werden können, die in der Lage sind, Zugkräfte zuverlässig zu übertragen. Da die Spannmittel beim Zusammenfalten der (nicht dargestellten) Dachplane zusammenlegbar sein sollten, um die Dachöffnung freizugeben, ist es nicht erforderlich, dass die Spannmittel 30 drucksteif sind.

In Fig. 4 ist im Einzelnen gezeigt, dass das Spannmittel 30 endseitig eine Einrichtung zum Einstellen der Länge 31 aufweist, mit der die Länge des Spannmittels 30 durch Verschrauben eingestellt werden kann. Endseitig ist an dem Spannmittel 30 ferner ein gabelförmiges Gelenkende 32 vorgesehen, das den Lagerabschnitt 23a, 23b beidseitig umschließt und mit einem Gelenkstift 33 gelenkig an dem Lagerauge 24 angeschlossen ist. Die Achse des Gelenkauges 24 verläuft hierbei in einer Ebene, die zur Erstreckung des Spriegels parallel ist, wobei die Achse senkrecht zu der Zugrichtung des Spannmittels 30 ausgerichtet ist.

Man erkennt ferner, dass an den beiden bezüglich einer Mittelebene spiegelsymmetrisch ausgebildeten Lagerabschnitten 23a, 23b jeweils ein als vorstehender Stift ausgebildeter Anschlag 25 vorgesehen ist, auf dem das gabelförmige Gelenkteil 33 ruhen kann. Der Anschlag 25 ist hierbei als durch eine entsprechende Bohrung hindurch getriebener kurzer Stift ausgeführt, der beidseitig über die Stirnflächen des Lagerabschnitts 23a, 23b vorsteht und damit den Anschlag 25 bildet. Der Anschlag 25 verhindert, dass in bestimmten Fällen, in denen das Spannmittel 30 entspannt ist, das Spannmittel 30 nach unten über den Anschlag 25 hinaus hindurch fällt und in den Laderaum vorsteht. Es ist möglich, das gabelförmige Gelenk 33 und/oder den Anschlag 25 anders, z.B. einseitig, auszubilden, um dieselbe Wirkung zu erreichen.

Der Spannmittelhalter 20 ist insgesamt als Blechbiegeteil hergestellt, so dass er starke Kräfte aufnehmen kann. Es ist allerdings auch möglich, den Spannmittelhalter als Kunststoffteil auszugestalten, wenn dieses eine ausreichende Zugsteifigkeit aufweist, die beispielsweise durch eine Armierung mit faserverstärkten Materialien erzielbar ist.

Der Spannmittelhalter wird zweckmäßig eingesetzt in einem Planenaufbau, wie er üblicherweise für ein Nutzfahrzeug, einen LKW, einen Anhänger, einen Auflieger, einen Container, ein Schienenfahrzeug, ein Schwimmbad, ein Gebäude oder anderes quaderförmiges Gebilde eingesetzt wird, wobei ein öffnungsfähiger Abschluss einer seitlichen Öffnung, also beispielsweise einer Seitenwand, oder eine oberen Öffnung, also beispielsweise eines Dachs, durch eine Plane bedeckt ist, die von dem Verdeckgestell, zu dem die Spriegel 41 und die Längsträger 50 gehören, getragen ist. Hierbei sind die einander gegenüberliegenden Führungen bzw. Längsträger 50 durch die Spannmittel 30 miteinander verbunden, in der Regel derart, dass die Spannmittel 30 in einer Eckpartie des Planenaufbaus festgelegt sind, und anderenends jeweils an einem Zugpunkt, der vorliegend durch den Spriegel 41 realisiert ist, in etwa in der Mitte des gegenüberliegenden Längsträgers 50 angeschlossen sind, so dass eine Entlastung der Zugkräfte, die auf den Längsträger 50 wirken, durch die Spannmittel 30 erreicht wird, die die Kräfte in den gegenüberliegenden Längsträger einleiten. Die Besonderheit besteht hierbei darin, dass der Spannmittelhalter ein Lagerauge vorsieht, das es ermöglicht, dass das Spannmittel gelenkig einer Faltbewegung der Plane folgen kann, so dass bei Festlegen des Spannmittels 30 an der (nicht dargestellten) Plane eine Verschwenkung in dem Lagerauge 24 erfolgt, und damit ein Knicken des Spannmittels 30 verhindert ist.

Das Spannmittel 30 kann hierbei auch an einem Lagerauge schwenkbar angeschlossen sein, das mit einem anderen als wie vorstehend dargestellten Spannmittelhalter 20 ausgeführt ist, wobei hierbei wichtig ist, dass eine Verschwenkung des Spannmittels 30 um eine Achse nach oben zugelassen ist, die vorzugsweise senkrecht zur Zugrichtung des Spannmittels 30 gegeben ist. Ferner wird das Spannmittel 30 bei Zusammenfalten der Plane mit der Plane nach oben verschwenkt, so dass die Schwenkbewegung um die Achse 33 in das entsprechende Gelenk um das Lagerauge 24 eingeleitet wird. Hierzu ist das Spannmittel 30 mit der Plane verbunden, beispielsweise in einer Tasche der Plane geführt.

Zweckmäßigerweise ist ein als Zugband ausgebildetes Federglied an den beiden Spannmitteln 30 jeweils im Bereich der Einstelleinrichtung 31 angeschlossen, die beide Spannmittel 30 in Richtung auf eine Verschwenkung nach oben (Fig. 4) vorspannt. Hierdurch wird die Aufstellbewegung des Spannmittels 30 um die Achse 33 zusätzlich unterstützt. Alternativ ist es möglich, andere Federglieder hierfür vorzusehen, oder aber im Bereich der Achse 33 eine Schenkelfeder vorzusehen, die das gabelförmige Gelenkteil 32 gegen den Spannmittelhalter 20 vorspannt.

Die Erfindung ist vorstehend anhand von Ausführungsbeispielen erläutert worden, bei denen das Spannmittel 30 als Drahtseil ausgebildet ist. Es versteht sich, dass das Spannmittel auch als Gurt, Kette oder anderes zugsteifes und flexibles Bauteil realisiert sein kann, das eine Faltung im Bereich der Dachplane ermöglicht und zugleich in Zugrichtung bei geschlossenem Dach Kräfte übertragen kann.

Die Erfindung ist vorstehend anhand eines Ausführungsbeispiels erläutert worden, bei dem der Spannmittelhalter 20 als U-förmiges Teil an ein Vierkantprofil 41 anpassbar ist. Es versteht sich, dass der Befestigungsabschnitt auch als Flacheisen oder dergleichen ausgebildet sein kann, das dann mit dem zugehörigen Spriegelschaft verbunden, beispielsweise verschraubt oder vernietet, wird, beispielsweise dergestalt, dass die Basisfläche 21b entfällt und zwei Schenkelflächen 21a jeweils für sich den Befestigungsabschnitt bilden.

Die Erfindung ist vorstehend anhand eines Ausführungsbeispiels erläutert worden, bei dem an den Spannmittelhalter 20 nur ein Lagerabschnitt für jede Seite vorgesehen ist. Es versteht sich, dass auch ein Spannmittelhalter mit mehreren Lagerabschnitten auf einer Seite oder mit mehreren Lageraugen an einem Lagerabschnitt vorgesehen sein kann, die es ermöglichen, mehrere Spannmittel anzuschließen oder aber ein Spannmittel in unterschiedlichen Abständen anzuschließen.

Die Erfindung ist vorstehend anhand eines Ausführungsbeispiels erläutert worden, bei dem ein Dachbereich eines Planenaufbaus mit Spannmitteln ausgestattet ist. Es versteht sich, dass auch eine öffnungsfähige Seite eines Planenaufbaus entsprechend ausgestattet sein kann.

## Patentansprüche

1. Planenaufbau, insbesondere für ein Nutzfahrzeug, einen Lkw, einen Anhänger, einen Auflieger, einen Container, ein Schienenfahrzeug, ein Schwimmbad, ein Gebäude oder dergleichen, umfassend
ein Verdeckgestell (40, 50) mit zumindest einer öffnungsfähigen Abdeckung, die einen Laderaum überspannt,
wobei die Abdeckung eine Plane umfasst, die an Spriegeln (40) festgelegt ist,
wobei die Spriegel (40) entlang einer Führung (50) des Verdeckgestells zum Öffnen und Schließen der Abdeckung durch Zusammenfalten der Plane verlagerbar sind,
bei dem die Führungen (50) durch zugfeste Spannmittel (30) miteinander verbunden sind, die einen Bereich der Führung (50) mit einem gegenüberliegenden Bereich der Führung (50) verspannen,
wobei das Spannmittel (30) an einem Spannmittelhalter (20) anschließbar ist,
wobei der Spannmittelhalter (20) einen Befestigungsabschnitt (21) zur Befestigung an einem Spriegel (40) des Planenaufbaus und einen ersten Lagerabschnitt (23a; 23b), der ein Lagerauge (24) für den Anschluss eines Spannmittels (30) aufweist, umfasst,
wobei das Spannmittel (30) endseitig in dem Lagerauge (24) angeschlossen ist,
**dadurch gekennzeichnet,**
**dass** das Lagerauge (24) eine Achse (33) aufweist, um die das Spannmittel (30) nach oben schwenkbar ist,
**dass** die Achse (33) senkrecht zu einer Zugrichtung des Spannmittels (30) ausgerichtet ist, und
**dass** das Spannmittel (30) mit dem Zusammenfalten der Plane mit der Plane um die Achse (33) nach oben verschwenkbar ist.

2. Planenaufbau nach Anspruch 1, **dadurch gekennzeichnet, dass** an dem Befestigungsabschnitt (21) ein zweiter Lagerabschnitt (23b; 23a) angeordnet ist, der einen Winkel zu dem Befestigungsabschnitt (21) aufweist.

3. Planenaufbau nach Anspruch 2, **dadurch gekennzeichnet, dass** an der erste Lagerabschnitt und der zweite Lagerabschnitt spiegelbildlich angeordnet sind.

4. Planenaufbau nach einem der Ansprüche 1 bis 3, **dadurch gekennzeichnet, dass** der Befestigungsabschnitt (21) U-förmig ausgebildet ist und eine Basisfläche (21b) sowie senkrecht hiervon abstehend eine Schenkelfläche (21a) und eine zweite Schenkelfläche (21a) aufweist, so dass das gebildete U von unten an ein Vierkantprofil (41) anschließbar ist.

5. Planenaufbau nach Anspruch 4, **dadurch gekennzeichnet, dass** der Lagerabschnitt (23a; 23b) jeweils von einer Schenkelfläche (21a) absteht, und dass die einander gegenüberliegenden Schenkelflächen (21a) jeweils eine miteinander fluchtende Bohrung (22) aufweisen, die von einem Sicherungsstift (29) durchsetzbar ist.

6. Planenaufbau nach einem der vorhergehenden Ansprüche, **dadurch gekennzeichnet, dass** der Lagerabschnitt (23a; 23b) einen Anschlag (25) aufweist, auf dem das Spannmittel (30) ablegbar ist.

7. Planenaufbau nach einem der vorhergehenden Ansprüche, **dadurch gekennzeichnet, dass** der Spannmittelhalter als Blechbiegeteil hergestellt ist.

8. Planenaufbau nach einem der vorhergehenden Ansprüche, **dadurch gekennzeichnet, dass** eine Führungsanordnung für ein Federglied vorgesehen ist, das die Spannmittel (30) in eine Schwenkrichtung um das Lagerauge (24) vorspannt.

9. Planenaufbau nach einem der vorhergehenden Ansprüche, **dadurch gekennzeichnet, dass** die Abdeckung eine seitliche oder eine obere Öffnung des Laderaums überspannt.

10. Planenaufbau nach einem der vorhergehenden Ansprüche, **dadurch gekennzeichnet, dass** ein Federglied vorgesehen ist, das die Spannmittel (30) in eine Schwenkrichtung um das Lagerauge (24) vorspannt.

11. Planenaufbau nach einem der vorhergehenden Ansprüche, **dadurch gekennzeichnet, dass** das Spannmittel (30) als Drahtseil ausgebildet ist, das endseitig jeweils gelenkig in dem Lagerauge (24) aufgenommen ist.

12. Planenaufbau nach einem der vorhergehenden Ansprüche, **dadurch gekennzeichnet, dass** das Spannmittel (30) über einen Gelenkstift (33) gelenkig an dem Lagerauge (24) angeschlossen ist.

13. Planenaufbau nach einem der vorhergehenden Ansprüche, **dadurch gekennzeichnet, dass** die öffnungsfähige Abdeckung als öffnungsfähiges Dach ausgebildet ist.

14. Planenaufbau nach einem der vorhergehenden Ansprüche, **dadurch gekennzeichnet, dass** mehrere der Spannmittel (30) eine den Dachbereich des Planenaufbaus diagonal überspannende Dachaussteifung bilden.

15. Planenaufbau nach einem der vorhergehenden Ansprüche, **dadurch gekennzeichnet, dass** das Spannmittel (30) wenigstens an einem von vorderen Eckbereich des Verdeckgestells und von hinteren verfahrbaren Spriegel im Bereich derselben Längsseite des Verdeckgestells festgelegt ist, und dass das Spannmittel (30) in wenigstens einem Zugpunkt in einem Bereich der anderen Längsseite des Verdeckgestells angeschlossen ist, und dass der Zugpunkt in einem Spriegel (40) angeordnet ist.

## Claims

1. Tarpaulin structure, in particular for a commercial vehicle, a truck, a trailer, a semitrailer, a container, a rail vehicle, a swimming pool, a building or the like, comprising
a folding top frame (40, 50) having at least one openable cover which spans a cargo space,
wherein the cover comprises a tarpaulin which is attached to bows (40), wherein the bows (40) are movable along a guide (50) of the folding top frame for opening and closing the cover by folding the tarpaulin,
in which the guides (50) are interconnected by tension-resistant tensioning means (30) which brace a region of the guide (50) with an opposite region of the guide (50),
wherein the tensioning means (30) are connectable to a tensioning means holder (20),
wherein the tensioning means holder (20) comprises a fastening portion (21) for fastening to a bow (40) of the tarpaulin structure and a first bearing portion (23a; 23b) which has a bearing eye (24) for connecting a tensioning means (30),
wherein the tensioning means (30) are connected in the bearing eye (24) at the end thereof,
**characterized in**
**that** the bearing eye (24) has an axis (33) about which the tensioning means (30) can be pivoted upward,
**that** the axis (33) is oriented perpendicularly to a tensioning direction of the tensioning means (30), and
**that** the tensioning means (30) can be pivoted upward about the axis (33) together with the tarpaulin when the tarpaulin is folded.

2. Tarpaulin structure according to claim 1, **characterized in that** a second bearing portion (23b; 23a) is arranged on the fastening portion (21), which second bearing portion is at an angle to the fastening portion (21).

3. Tarpaulin structure according to claim 2, **characterized in that** the first bearing portion and the second bearing portion are arranged mirror-symmetrically.

4. Tarpaulin structure according to any of claims 1 to 3, **characterized in that** the fastening portion (21) is U-shaped and has a base surface (21b) as well as a leg surface (21a) and a second leg surface (21a) which protrude perpendicularly from said base surface, such that the formed U-shape can be connected from below to a square profile (41).

5. Tarpaulin structure according to claim 4, **characterized in that** the bearing portion (23a; 23b) in each case projects from a leg surface (21a), and that the opposing leg surfaces (21a) each have a bore (22), which bores are aligned with one another and can be passed through by a securing pin (29).

6. Tarpaulin structure according to any of the preceding claims, **characterized in that** the bearing portion (23a; 23b) has a stop (25) on which the tensioning means (30) can be placed.

7. Tarpaulin structure according to any of the preceding claims, **characterized in that** the tensioning means holder is produced as a bent sheet metal part.

8. Tarpaulin structure according to any of the preceding claims, **characterized in that** a guide arrangement is provided for a spring member which preloads the tensioning means (30) in a pivoting direction about the bearing eye (24).

9. Tarpaulin structure according to any of the preceding claims, **characterized in that** the cover spans a lateral opening or an upper opening of the cargo space.

10. Tarpaulin structure according to any of the preceding claims, **characterized in that** a spring member is provided which preloads the tensioning means (30) in a pivoting direction about the bearing eye (24).

11. Tarpaulin structure according to any of the preceding claims, **characterized in that** the tensioning means (30) is designed as a wire cable which in each case is accommodated in the bearing eye (24) in an articulated manner at the end thereof.

12. Tarpaulin structure according to any of the preceding claims, **characterized in that** the tensioning means (30) is connected to the bearing eye (24) in an articulated manner via a hinge pin (33).

13. Tarpaulin structure according to any of the preceding claims, **characterized in that** the openable cover is designed as an openable roof.

14. Tarpaulin structure according to any of the preceding claims, **characterized in that** a plurality of the tensioning means (30) form a roof reinforcement diagonally spanning the roof region of the tarpaulin structure.

15. Tarpaulin structure according to any of the preceding claims, **characterized in that** the tensioning means (30) is attached to at least one of front corner region of the folding top frame and of rear movable bow in the region of the same longitudinal side of the folding top frame, and that the tensioning means (30) is connected at at least one tension point in a region of the other longitudinal side of the folding top frame, and that the tension point is arranged in a bow (40).

## Revendications

1. Structure de bâche, en particulier pour un véhicule utilitaire, un camion, une remorque, une semi-remorque, un conteneur, un véhicule ferroviaire, une piscine, un bâtiment ou autre produit semblable, comprenant
un cadre supérieur (40, 50) comportant au moins une protection pouvant être ouverte, laquelle recouvre un espace de chargement, dans laquelle la protection comprend une bâche, laquelle est fixée à des arceaux (40),
dans laquelle les arceaux (40) peuvent être déplacés le long d'un guide (50) du cadre supérieur pour ouvrir et fermer la protection en repliant la bâche,
les guides (50) étant reliés les uns aux autres par des moyens de serrage (30) résistants à la traction, lesquels serrent une zone du guide (50) par rapport à une zone opposée du guide (50),
dans laquelle le moyen de serrage (30) peut être relié à un élément de maintien de moyens de serrage (20),
dans laquelle l'élément de maintien de moyens de serrage (20) comprend une section de fixation (21) destinée à la fixation à un arceau (40) de la structure de bâche et une première section de support (23a ; 23b), laquelle comporte un œillet de support (24) pour la liaison à un moyen de serrage (30),
dans laquelle le moyen de serrage (30) est raccordé au niveau de son extrémité dans l'œillet de support (24),
**caractérisée en ce**
**que** l'œillet de support (24) comporte un axe (33) autour duquel le moyen de serrage (30) peut pivoter vers le haut,
**que** l'axe (33) est aligné perpendiculairement à une direction de traction des moyens de serrage (30), et
**que** le moyen de serrage (30) peut pivoter vers le haut autour de l'axe (33) avec la bâche lorsque la bâche est repliée.

2. Structure de bâche selon la revendication 1, **caractérisée en ce qu'**une seconde section de support (23b ; 23a) est disposée sur la section de fixation (21) et présente un angle par rapport à la section de fixation (21).

3. Structure de bâche selon la revendication 2, **caractérisée en ce que** la première section de support et la seconde section de support sont disposées de manière spéculaire.

4. Structure de bâche selon l'une quelconque des revendications 1 à 3, **caractérisée en ce que** la section de fixation (21) est en forme de U et comporte une surface de base (21b), ainsi qu'une surface de branche (21a) et une seconde surface de branche (21a) s'éloignant perpendiculairement de la surface de base de telle sorte que le U formé peut être relié par le bas à un profilé carré (41).

5. Structure de bâche selon la revendication 4, **caractérisée en ce que** la section de support (23a ; 23b) fait saillie respectivement d'une surface de branche (21a), et que les surfaces de branche (21a) opposées les unes aux autres comportent respectivement un alésage (22) aligné l'un avec l'autre, lequel peut être traversé par une goupille de sécurité (29).

6. Structure de bâche selon l'une quelconque des revendications précédentes, **caractérisée en ce que** la section de support (23a ; 23b) comporte une butée (25) sur laquelle peut être placé le moyen de serrage (30).

7. Structure de bâche selon l'une quelconque des revendications précédentes, **caractérisée en ce que** l'élément de maintien de moyens de serrage est réalisé sous la forme d'une pièce en tôle pliée.

8. Structure de bâche selon l'une quelconque des revendications précédentes, **caractérisée en ce qu'**un agencement de guidage est fourni pour un élément à ressort, lequel précontraint les moyens de serrage (30) dans une direction de pivotement autour de l'œillet de support (24).

9. Structure de bâche selon l'une quelconque des revendications précédentes, **caractérisée en ce que** la protection recouvre une ouverture latérale ou une ouverture supérieure de l'espace de chargement.

10. Structure de bâche selon l'une quelconque des revendications précédentes, **caractérisée en ce qu'**un élément à ressort est fourni, lequel précontraint les moyens de serrage (30) dans une direction de pivotement autour de l'œillet de support (24).

11. Structure de bâche selon l'une quelconque des revendications précédentes, **caractérisée en ce que** le moyen de serrage (30) est conçu sous la forme d'un câble métallique, lequel est reçu au niveau de son extrémité dans l'œillet de support (24), respectivement de manière articulée.

12. Structure de bâche selon l'une quelconque des revendications précédentes, **caractérisée en ce que** le moyen de serrage (30) est raccordé de manière articulée à l'œillet de support (24) par l'intermédiaire d'une goupille d'articulation (33).

13. Structure de bâche selon l'une quelconque des revendications précédentes, **caractérisée en ce que** la protection pouvant être ouverte est conçu sous la forme d'un toit pouvant être ouvert.

14. Structure de bâche selon l'une quelconque des revendications précédentes, **caractérisée en ce que** plusieurs des moyens de serrage (30) forment un renforcement de toit recouvrant en diagonale la zone de toit de la structure de bâche.

15. Structure de bâche selon l'une quelconque des revendications précédentes, **caractérisée en ce que** le moyen de serrage (30) est fixé à au moins l'un parmi la zone angulaire avant du cadre supérieur et la zone d'un arceau arrière mobile du même côté longitudinal du cadre supérieur, et que le moyen de serrage (30) est raccordé à au moins un point de tension dans une zone de l'autre côté longitudinal du cadre supérieur, et que le point de tension est disposé sur un arceau (40).
